# FASCICULE DE BREVET EUROPEEN

(11) **EP 1 116 656 B1**
(45) Date de publication et mention de la délivrance du brevet: **21.04.2004**
(21) Numéro de dépôt: 01400098.8
(22) Date de dépôt: 15.01.2001
(51) Int. Cl.: B64D 15/04

(54) **Bec de voilure d'aéronef équipé d'un dispositif d'antigivrage**
Vorflügelenteisungseinrichtung für eine Tragfläche eines Flugzeuges
Aircraft leading edge slat equipped with an anti-icing system

(30) Priorité: 17.01.2000 FR 0000525
(43) Date de publication de la demande: 18.07.2001
(73) Titulaire: DASSAULT AVIATION, F-75008 Paris (FR)
(72) Inventeur: Laügt, Paul, 33127 Martignas (FR)
(74) Mandataire: Colas, Jean-Pierre

(56) Documents cités:
- EP-A- 0 230 684
- FR-A- 979 460
- US-A- 4 615 499
- US-A- 4 688 745
- US-A- 4 741 499
- US-A- 5 807 454

## Description

La présente invention se rapporte à un bec de voilure d'aéronef équipé d'un dispositif d'antigivrage conformément au préambule de la revendication 1, à une voilure équipée d'un tel bec, et à un aéronef équipé d'une telle voilure.

On rappelle ici que l'on désigne par bec de voilure d'aéronef un organe mobile ou fixe formant au moins une partie du bord d'attaque de cette voilure.

On connaît du brevet US 4 741 499 un bec de voilure d'aéronef comprenant une paroi externe et un dispositif d'antigivrage du type permettant de faire circuler de l'air chaud selon la direction de l'envergure de ladite voilure, ledit dispositif comprenant a) un conduit de distribution d'air chaud s'étendant à l'intérieur dudit bec selon ladite direction et comportant une pluralité d'orifices répartis sur au moins une partie de sa longueur, et b) des moyens d'alimentation en air chaud communiquant avec l'une des extrémités dudit conduit de distribution.

Ce système de la technique antérieure permet de lutter de manière relativement efficace contre la formation de givre sur un bec d'aéronef.

Toutefois, dans ce système de la technique antérieure, les moyens d'alimentation en air chaud comprennent un organe de chauffage et une turbine situés à l'intérieur du bec de voilure, permettant de chauffer et de faire circuler l'air chaud en circuit fermé à l'intérieur du bec de voilure.

Dans un tel système, on doit transformer l'énergie des moteurs de propulsion de l'aéronef en énergie électrique pour alimenter les organes de chauffage et les turbines, puis transformer cette énergie électrique en énergie thermique, de sorte que l'on obtient au bout du compte une déperdition importante d'énergie qui grève la consommation en carburant de l'aéronef.

La présente invention a pour but de supprimer les inconvénients susmentionnés.

On atteint ce but de l'invention avec un bec de voilure d'aéronef comprenant une paroi externe et un dispositif d'antigivrage du type permettant de faire circuler de l'air chaud selon la direction de l'envergure de ladite voilure, ledit dispositif comprenant a) un conduit de distribution d'air chaud s'étendant à l'intérieur dudit bec selon ladite direction et comportant une pluralité d'orifices répartis sur au moins une partie de sa longueur, et b) des moyens d'alimentation en air chaud communiquant avec l'une des extrémités dudit conduit de distribution, remarquable en ce que lesdits moyens d'alimentation en air chaud sont adaptés pour être reliés par au moins une conduite située à l'extérieur dudit bec à au moins un moteur de propulsion dudit aéronef.

Grâce à ces caractéristiques, on peut utiliser directement de l'air chaud en provenance des moteurs de l'aéronef pour réaliser l'antigivrage, ce qui permet d'éviter les déperditions d'énergies inhérentes au système de la technique antérieure.

La présente invention concerne également:
- une voilure d'aéronef, remarquable en ce qu'elle comprend un bec conforme à ce qui précède, et
- un aéronef, remarquable en ce qu'il comprend une voilure conforme à ce qui précède.

D'autres caractéristiques et avantages de la présente invention apparaîtront à la lecture de la description qui va suivre, et à l'examen du dessin annexé, dans lequel:
- la figure 1 est une vue en coupe transversale d'un bec de voilure mobile selon l'invention,
- la figure 2 est une vue de dessus du bec de voilure mobile de la figure 1, la partie de paroi formant l'extrados de ce bec ayant été ôtée, et
- la figure 3 est une vue en coupe transversale d'un bec fixe de voilure selon l'invention.

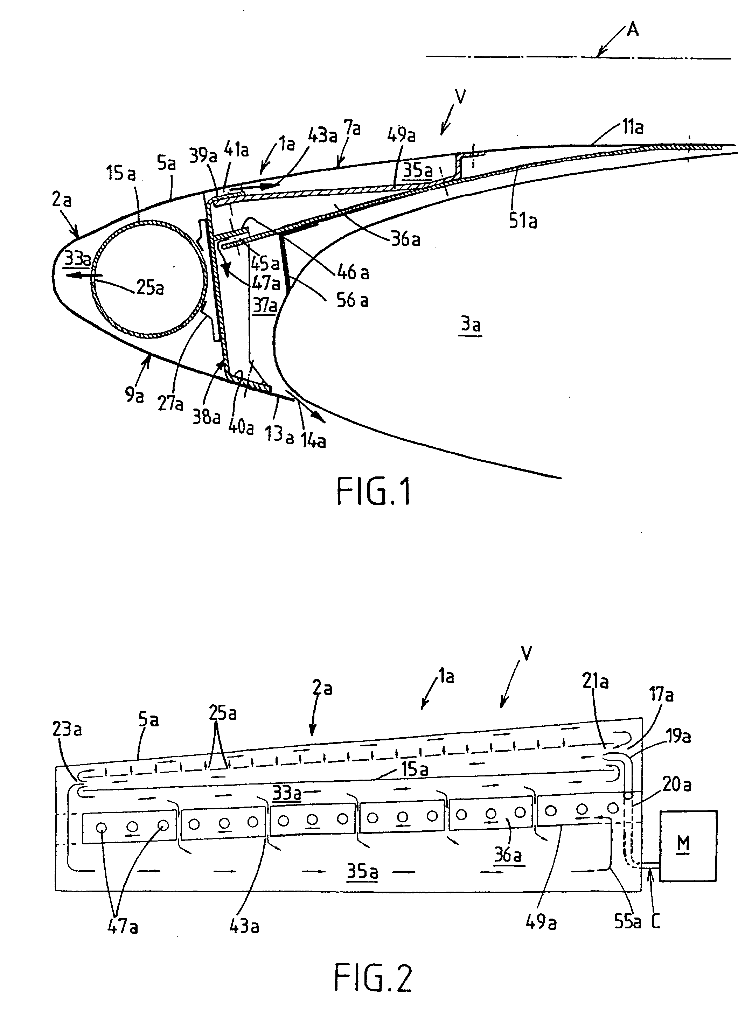

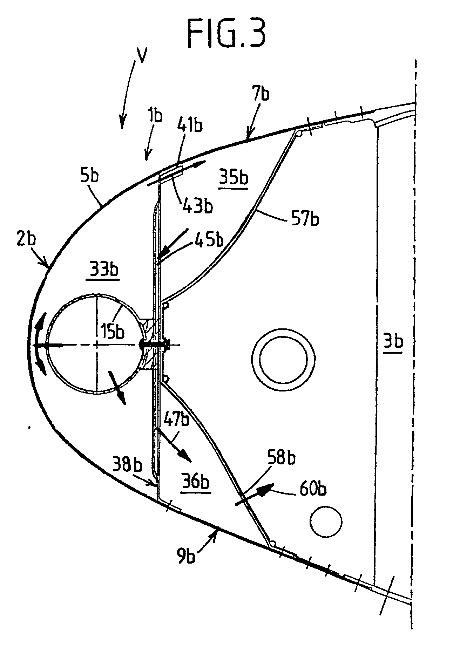

Sur les figures 1 et 2, les références numériques sont indexées par la lettre a; sur la figure 3, elles sont indexées par la lettre b.

Des références numériques identiques désignent des organes ou ensembles d'organes identiques ou analogues.

Dans ce qui suit, les termes « supérieur » « inférieur », « au-dessus » et « au-dessous » doivent s'entendre en considérant que les bords supérieur et inférieur des feuilles des figures annexées coïncident respectivement avec le haut et le bas de la direction verticale.

On se reporte aux figures 1 et 2, sur lesquelles on a représenté un bec mobile 1a selon l'invention formant une partie du bord d'attaque 2a d'une voilure V d'aéronef A.

On précise ici que le terme « mobile » signifie que le bec peut coulisser sur des rails (non représentés) pour atteindre une position écartée par rapport à la partie fixe de voilure 3a, afin d'améliorer la portance de l'aéronef notamment lors de l'atterrissage.

Le bec mobile 1a est formé par une seule paroi externe 5a définissant un extrados 7a, un intrados 9a et une queue de bec 11a.

L'extrémité 13a de l'intrados 9a définit un certain jeu 14a avec la partie fixe de voilure 3a.

A l'intérieur du bec 1a se trouve un dispositif d'antigivrage comprenant un conduit de distribution d'air chaud 15a s'étendant selon la longueur du bec 1a, c'est-à-dire selon la direction de l'envergure de la voilure V.

Comme cela est visible sur la figure 2, des moyens d'alimentation en air chaud pouvant comprendre un injecteur 19a et une partie formant tube télescopique 20a communiquent avec l'une 17a des extrémités du conduit 15a.

Selon une caractéristique essentielle de l'invention, ces moyens d'alimentation en air chaud sont adaptés pour être reliés par au moins une conduite C située à l'extérieur du bec 1a à au moins un moteur M de propulsion de l'aéronef A.

L'injecteur 19a ménage un passage 21a avec le conduit 15a. L'autre extrémité 23a du conduit 15a est ouverte.

Le conduit 15a comprend des orifices 25a répartis sur au moins une partie de sa longueur, et de préférence sur toute sa longueur. Ces orifices sont placés de préférence en vis-à-vis du bord d'attaque 2a (voir figures 1 et 2).

L'extrémité 17a du conduit 15a est de préférence fixée sur la structure du bec, et le reste de sa longueur est maintenu en position par des glissières 27a (voir figure 1).

Comme cela est visible sur les figures 1 et 2, le bec mobile 1a comprend un premier compartiment 33a situé à l'intérieur du bord d'attaque 2a et dans lequel s'étend le conduit de distribution 15a, un deuxième compartiment 35a situé sous l'extrados 7a, un troisième compartiment 36a situé sensiblement entre les premier 33a et deuxième 35a compartiments, et un quatrième compartiment 37a situé sensiblement entre le premier compartiment 33a et la partie fixe 3a de la voilure.

Ces compartiments sont formés par:
- un longeron 38a dont la section est conformée sensiblement en E dont les parties supérieure 39a et inférieure 40a sont respectivement fixées sur l'extrados 7a et sur l'intrados 9a, comportant d'une part des premiers gaufrages 41a formés sur la partie supérieure 39a du E et définissant des passages 43a pour l'air chaud entre les premier 33a et deuxième 35a compartiments, et d'autre part des deuxièmes gaufrages 45a formés sur la partie médiane 46a du E et définissant des passages 47a pour l'air chaud entre les troisième 36a et quatrième 37a compartiments,
- un profilé externe 49a fixé d'une part sur la partie supérieure 39a du E et d'autre part sur l'extrados 7a du bec 1a, et par
- un profilé interne 51a fixé d'une part sur la partie médiane 46a du E et d'autre part sur le profilé externe 49a et sur l'extrados 7a du bec 1a.

Comme cela apparaît sur la figure 2, le profilé externe 49a comprend, au voisinage de l'injecteur 19a, dés passages 55a (formés par exemple par des rainures ou par des orifices) pour l'air chaud entre les deuxième 35a et troisième 36a compartiments.

Un joint d'isolation 56a est interposé entre le profilé interne 51a et la partie fixe de voilure 3a.

On se reporte à présent à la figure 3 sur laquelle on a représenté un bec 1b monté fixe sur la partie fixe de voilure 3b.

Comme cela apparaît sur cette figure, le bec fixe 1b diffère du bec mobile 1a essentiellement en ce que les compartiments situés dans ce dernier ont une autre forme.

Ce bec fixe comprend un premier compartiment 33b situé à l'intérieur du *bord* d'attaque 2b et dans lequel s'étend le conduit de distribution 15b, un deuxième compartiment 35b situé sous l'extrados 7b, et un troisième compartiment 36b situé au-dessus de l'intrados 9b.

Ces compartiments sont formés par:
- un longeron 38b dont la section est conformée sensiblement en C fixé à l'intérieur du bec, comportant d'une part des premiers gaufrages 41b formant des passages 43b pour l'air chaud entre les premier 33b et deuxième 35b compartiments et d'autre part des deuxièmes gaufrages 45b formant des passages 47b pour l'air chaud entre les deuxième 35b et troisième 36b compartiments, et par
- des profilés 57b fixés au longeron en C 38b, à l'extrados 7b et à l'intrados 9b du bec 1b.

La paroi externe 5b comprend, dans la partie inférieure des profilés 57b, des orifices 58b définissant des passages 60b pour l'air chaud entre le troisième compartiment 36b et un caisson (non représenté) permettant de ramener l'air chaud au voisinage du fuselage.

De même que dans le cas du bec mobile 1a, des moyens d'alimentation en air chaud pouvant comprendre un injecteur (non représenté) communiquent avec l'une des extrémités du conduit 15b.

Cet injecteur est adapté pour être relié par au moins une conduite à au moins un moteur de propulsion de l'aéronef.

Le bec 1b étant fixe, il n'est pas nécessaire de prévoir de partie formant tube télescopique.

Le fonctionnement et les avantages du bec de voilure selon l'invention résultent directement de la description qui précède.

Sur les figures 1 à 3, le parcours emprunté par de l'air chaud est indiqué par des flèches.

Dans le cas du bec mobile 1a (voir figure 2), cet air chaud en provenance du moteur de propulsion M arrive dans le conduit 15a via la conduite C, la partie formant tube télescopique 20a et l'injecteur 19a.

L'air chaud sort ensuite du conduit 15a dans le premier compartiment 33a d'une part par l'extrémité ouverte 23a et d'autre part par les orifices 25a et circule en contact avec la paroi externe 5a, ce qui permet de réaliser l'antigivrage du bord d'attaque 2a du bec 1a.

Cet air chaud peut alors soit recirculer à l'intérieur du conduit de distribution 15a en empruntant le passage 21a, soit rejoindre le deuxième compartiment 35a en empruntant les passages 43a (voir figures 1 et 2).

Dans ce dernier cas, cet air chaud permet de réaliser l'antigivrage de l'extrados 7a du bec 2a en circulant directement le long de la paroi 2a.

Il rejoint ensuite le troisième compartiment 36a en empruntant les passages 55a (voir figure 2) en extrémité de bec, puis il emprunte les passages 47a (voir figure 1) pour rejoindre le quatrième compartiment 37a et enfin pour s'infiltrer dans le jeu 14a afin de gagner l'extérieur.

Dans le cas du bec fixe 1b (voir figure 3), le chemin suivi par l'air chaud est sensiblement analogue: après être arrivé dans le deuxième compartiment 35b en empruntant les passages 43b, l'air chaud emprunte les passages 47b pour rejoindre le troisième compartiment 36b, puis il emprunte les passages 60b avant de rejoindre le caisson (non représenté) permettant de conduire cet air au voisinage du fuselage.

Comme on peut le comprendre à présent, le bec de voilure selon l'invention permet d'utiliser directement de l'air chaud en provenance des moteurs de l'aéronef pour réaliser l'antigivrage, ce qui permet d'éviter les déperditions d'énergies inhérentes au système de la technique antérieure, et ainsi de réduire la sur-consommation de carburant nécessaire pour réaliser l'antigivrage.

Bien entendu, la présente invention n'est pas limitée aux modes de réalisation décrits et représentés, fournis à titre d'exemple illustratif et non limitatif.

## Revendications

1. Bec (1a ; 1b) de voilure (V) d'aéronef (A) comprenant une paroi externe (5a; 5b) et un dispositif d'antigivrage du type permettant de faire circuler de l'air chaud selon la direction de l'envergure de ladite voilure, ledit dispositif comprenant a) un conduit de distribution d'air chaud (15a ; 15b) s'étendant à l'intérieur dudit bec selon ladite direction et comportant une pluralité d'orifices (25a) répartis sur au moins une partie de sa longueur, et b) des moyens d'alimentation en air chaud (19a) communiquant avec l'une (17a) des extrémités dudit conduit de distribution (15a; 15b), **caractérisé en ce que** lesdits moyens d'alimentation en air chaud (19a) sont adaptés pour être reliés par au moins une conduite (C) située à l'extérieur dudit bec à au moins un moteur (M) de propulsion dudit aéronef.

2. Bec (1a ; 1b) de voilure (V) selon la revendication 1, **caractérisé en ce que** lesdits moyens d'alimentation en air chaud comprennent un injecteur d'air chaud (19a) débouchant à l'intérieur dudit conduit de distribution (15a; 15b) en ménageant un passage (21a) avec ce dernier.

3. Bec (1a; 1b) de voilure (V) selon l'une des revendications 1 ou 2, **caractérisé en ce que** l'autre extrémité (23a) dudit conduit de distribution (15a; 15b) est ouverte.

4. Bec (1a; 1b) de voilure (V) selon l'une quelconque des revendications précédentes, **caractérisé en ce que** ledit conduit de distribution (15a; 15b) est fixé à l'une de ses extrémités sur la structure dudit bec et **en ce qu'**il est maintenu en position sur le reste de sa longueur par des moyens de glissière (27a).

5. Bec (1a; 1b) de voilure (V) selon l'une quelconque des revendications précédentes, **caractérisé en ce qu'**il comprend:
- un premier compartiment (33a; 33b), situé à l'intérieur du bord d'attaque (2a; 2b) dudit bec et dans lequel s'étend ledit conduit de distribution (15a; 15b), permettant l'antigivrage de ce bord d'attaque,
- un deuxième compartiment (35a; 35b), situé sous l'extrados (7a; 7b) dudit bec, permettant l'antigivrage de cet extrados, et
- un troisième compartiment (36a; 36b) permettant de collecter ledit air chaud,
lesdits premier et deuxième compartiments d'une part, et lesdits deuxième et troisième compartiments d'autre part communiquant entre eux.

6. Bec (1a) de voilure (V) selon la revendication 5, **caractérisé en ce qu'**il est mobile, **en ce que** lesdits moyens d'alimentation en air chaud comprennent une partie (20a) formant tube télescopique et **en ce que** ledit troisième compartiment (36a) est situé sensiblement entre lesdits premier (33a) et deuxième (35a) compartiments.

7. Bec (1a) de voilure (V) selon la revendication 6, **caractérisé en ce qu'**il comprend en outre un quatrième compartiment (37a) situé sensiblement entre ledit premier compartiment (33a) et la partie fixe (3a) de ladite voilure et communiquant avec l'extérieur, et **en ce que** lesdits premier (33a), deuxième (35a), troisième (36a) et quatrième (37a) compartiments sont formés par:
- un longeron (38a) dont la section est conformée sensiblement en E fixé à l'intérieur dudit bec, comportant d'une part des premiers passages (43a) pour ledit air chaud entre lesdits premier (33a) et deuxième (35a) compartiments et d'autre part des deuxièmes passages (47a) pour ledit air chaud entre lesdits troisième (36a) et quatrième (37a) compartiments,
- un profilé externe (49a) fixé d'une part sur la partie supérieure (39a) dudit E et d'autre part sur l'extrados (7a) dudit bec, comportant des troisièmes passages (55a) pour ledit air chaud entre lesdits deuxième (35a) et troisième (36a) compartiments, et
- un profilé interne (51a) fixé d'une part sur la partie médiane (46a) dudit E et d'autre part sur ledit profilé externe (49a) et sur l'extrados (7a) dudit bec.

8. Bec (1a) de voilure (V) selon la revendication 7, **caractérisé en ce que** lesdits premiers passages (43a) sont établis par des premiers gaufrages (41 a) formés sur la partie supérieure (39a) dudit E, **en ce que** lesdits deuxièmes passages (47a) sont établis par des deuxièmes gaufrages formés sur la partie médiane dudit E, et **en ce que** lesdits troisièmes passages (55a) sont établis par des rainures ou des orifices (54a) formés sur ledit profilé externe (49a).

9. Bec (1b) de voilure (V) selon la revendication 5, **caractérisé en ce qu'**il est fixe et **en ce que** ledit troisième compartiment (36b) est situé sensiblement au-dessus de l'intrados (9a) de ladite voilure et **en ce qu'**il communique avec l'extérieur.

10. Bec (1b) de voilure (V) selon la revendication 9, **caractérisé en ce que** lesdits premier (33b), deuxième (35b) et troisième (36b) compartiments sont formés par:
- un longeron (38b) dont la section est conformée sensiblement en C fixé à l'intérieur dudit bec, comportant d'une part des premiers passages (43b) pour ledit air chaud entre lesdits premier (33b) et deuxième (35b) compartiments et d'autre part des deuxièmes passages (47b) pour ledit air chaud entre lesdits deuxième (35b) et troisième (36b) compartiments, et
- des profilés (57b) fixés audit longeron en C (38b), à l'extrados (7b) et à l'intrados (9b) dudit bec.

11. Bec (1b) de voilure (V) selon la revendication 10, **caractérisé en ce que** lesdits premiers (43b) et deuxièmes (47b) passages sont établis respectivement par des premiers (41b) et deuxièmes (45b) gaufrages formés sur ledit longeron (38b)

12. Voilure (V) d'aéronef (A), **caractérisée en ce qu'**elle comprend un bec (1a; 1b) conforme à l'une quelconque des revendications précédentes.

13. Aéronef (A), **caractérisé en ce qu'**il comprend une voilure (V) conforme à la revendication 12.

## Patentansprüche

1. Vorflügel (1a; 1b) für eine Tragfläche (V) eines Luftfahrzeugs (A), umfassend eine Außenwand (5a; 5b) und eine Enteisungsvorrichtung der Art, die es ermöglicht, warme Luft gemäß der Richtung der Spannweite der Tragfläche umlaufen zu lassen, wobei diese Vorrichtung umfasst a) eine Leitung zum Verteilen von warmer Luft (15a; 15b), die sich im Inneren des Vorflügels in der genannten Richtung erstreckt und eine Vielzahl von Öffnungen (25a), verteilt über mindestens einen Teil ihrer Länge, umfasst, und b) Mittel zur Versorgung mit warmer Luft (19a), die mit dem einen (17a) der Enden der Leitung zum Verteilen (15a, 15b) in Verbindung stehen, **dadurch gekennzeichnet, dass** die Mittel zur Versorgung mit warmer Luft (19a) dazu passend gemacht sind, mittels mindestens einer am Äußeren des Vorflügels befindlichen Leitung (C) mit mindestens einem Antriebsmotor (M) des Luftfahrzeugs verbunden zu werden.

2. Vorflügel (1a; 1b) für eine Tragfläche (V) gemäß Anspruch 1, **dadurch gekennzeichnet, dass** die Mittel zur Versorgung mit warmer Luft eine Warmluftdüse (19a) umfassen, die im Innern der Leitung zum Verteilen (15a; 15b) mündet, indem sie einen Durchlass (21a) zu dieser letzteren ausspart.

3. Vorflügel (1a; 1b) für eine Tragfläche (V) gemäß einem der Ansprüche 1 oder 2, **dadurch gekennzeichnet, dass** das andere Ende (23a) der Leitung zum Verteilen (15a; 15b) offen ist.

4. Vorflügel (1a; 1b) für eine Tragfläche (V) gemäß irgendeinem der vorhergehenden Ansprüche, **dadurch gekennzeichnet, dass** die Leitung zum Verteilen (15a; 15b) an einem ihrer Enden an der Struktur des Vorflügels befestigt ist und dadurch dass sie auf dem Rest ihrer Länge durch Mittel zum gleitenden Führen (27a) in Stellung gehalten wird.

5. Vorflügel (1a; 1b) für eine Tragfläche (V) gemäß irgendeinem der vorhergehenden Ansprüche, **dadurch gekennzeichnet, dass** er umfasst:
- eine erste Abteilung (33a; 33b), die sich im Innern der Vorderkante (2a; 2b) des Vorflügels befindet und in der sich die Leitung zum Verteilen (15a; 15b) erstreckt, welche die Enteisung dieser Vorderkante ermöglicht,
- eine zweite Abteilung (35a; 35b), die sich unter der Saugseite (7a; 7b) des Vorflügels befindet, welche die Enteisung dieser Saugseite ermöglicht, und
- eine dritte Abteilung (36a; 36b), die das Sammeln der warmen Luft ermöglicht.
wobei die erste und die zweite Abteilung einerseits, die zweite und die dritte Abteilung andererseits miteinander in Verbindung stehen.

6. Vorflügel (1a) für eine Tragfläche (V) gemäß Anspruch 5, **dadurch gekennzeichnet, dass** er beweglich ist, dadurch dass die Mittel zur Versorgung mit warmer Luft einen Teil (20a) umfassen, der ein teleskopisches Rohr bildet und dadurch, dass die dritte Abteilung (36a) sich im Wesentlichen genau zwischen der ersten (33a) und der zweiten (35a) Abteilung befindet.

7. Vorflügel (1a) für eine Tragfläche (V) gemäß Anspruch 6, **dadurch gekennzeichnet, dass** er außerdem eine vierte Abteilung (37 a) umfasst, die sich im Wesentlichen genau zwischen der ersten Abteilung (33a) und dem festen Teil (3a) der Tragfläche befindet und mit dem Äußeren in Verbindung steht, und dadurch dass die erste (33a), zweite (35a), dritte (36a) und vierte (37a) Abteilung gebildet werden durch:
- einen im Inneren des Vorflügels befestigten Längsträger (38a), dessen Querschnitt im Wesentlichen genau als ein E ausgestaltet ist, umfassend an der einen Seite erste Durchlässe (43a) für die warme Luft zwischen der ersten (33a) und der zweiten (35a) Abteilung, und an der anderen Seite zweite Durchlässe (47a) für die warme Luft zwischen der dritten (36a) und der vierten (37a) Abteilung,
- ein äußeres Profilblech (49a), befestigt an einer Seite an dem oberen Teil (39a) des E und an der anderen Seite an der Saugseite (7a) des Vorflügels, umfassend dritte Durchlässe (55a) für die warme Luft zwischen der zweiten (35a) und der dritten (36a) Abteilung, und
- ein inneres Profilblech (51a), befestigt an einer Seite an dem mittleren Teil (46a) des E und an der anderen Seite an dem äußeren Profilblech (49a) und an der Saugseite (7a) des Vorflügels.

8. Vorflügel (1a) für eine Tragfläche (V) gemäß Anspruch 7, **dadurch gekennzeichnet, dass** die ersten Durchlässe (43a) mittels erster Einprägungen (41a), geformt auf dem oberen Teil (39a) des E, angelegt sind, dadurch dass die zweiten Durchlässe (47a) mittels zweiter Einprägungen, geformt auf dem mittleren Teil des E, angelegt sind, und dadurch dass die dritten Durchlässe (55a) mittels Hohlkehlen oder Öffnungen (54a), geformt auf dem äußeren Profilblech (49a), angelegt sind.

9. Vorflügel (1b) für eine Tragfläche (V) gemäß Anspruch 5, **dadurch gekennzeichnet, dass** er feststeht und dadurch dass die dritte Abteilung (36b) sich im Wesentlichen genau über der Unterseite (9a) der Tragfläche befindet, und dadurch dass sie mit dem Äußeren in Verbindung steht.

10. Vorflügel (1b) für eine Tragfläche (V) gemäß Anspruch 9, **dadurch gekennzeichnet, dass** die erste (33b), zweite (35b) und dritte (36b) Abteilung gebildet werden durch:
einen im Inneren des Vorflügels befestigten Längsträger (38b), dessen Querschnitt im Wesentlichen genau als ein C ausgestaltet ist, umfassend an der einen Seite erste Durchlässe (43b) für die warme Luft zwischen der ersten (33b) und der zweiten (35b) Abteilung, und an der anderen Seite zweite Durchlässe (47b) für die warme Luft zwischen der zweiten (35b) und der dritten (36b) Abteilung, und
an dem C-förmigen Längsträger (38b), der Saugseite (7b) und der Unterseite (9b) des Vorflügels befestigte Profilbleche (57b).

11. Vorflügel (1b) für eine Tragfläche (V) gemäß Anspruch 10, **dadurch gekennzeichnet, dass** die ersten (43b) und zweiten (47b) Durchlässe jeweils mittels erster (41b) und zweiter (45b) Ausprägungen, geformt auf dem Längsträger (38b), angelegt sind.

12. Tragfläche (V) für ein Luftfahrzeug (A), **dadurch gekennzeichnet, dass** sie einen Vorflügel (1a; 1b) gemäß irgendeinem der vorhergehenden Ansprüche umfasst.

13. Luftfahrzeug (A), **dadurch gekennzeichnet dass** es eine Tragfläche (V) gemäß Anspruch 12 umfasst.

## Claims

1. A leading edge member (1a ; 1b) of an airfoil (V) of an aircraft having an outside wall (5a ; 5b) and a de-icing device of the type for circulating hot air in the direction of the span of said airfoil, said device including a) a hot air distribution duct (15a ; 15b) extending inside said leading edge member in said direction and having a plurality of orifices (25a) distributed over at least part of its length, and b) hot air supply means (19a) communicating with one end (17a) of said distribution duct (15a; 15b), **characterized in that** said hot air supply means (19a) are adapted to be connected by at least one duct (C) located outside said leading edge member to at least one propulsion engine (M) of said aircraft.

2. A leading edge member (1a; 1b) of an airfoil (V) according to claim 1, **characterized in that** said hot air supply means include a hot air injector (19a) discharging into the interior of said distribution duct (15a; 15b) and defining a passage (21a) therewith.

3. A leading edge member (1a ; 1b) of an airfoil (V) according to claim 1 or 2, **characterized in that** the other end (23a) of said distribution duct (15 ; 15b) is open.

4. A leading edge member (1a; 1b) of an airfoil (V) according to claim 1, **characterized in that** said distribution duct (15a ; 15b) is fixed at one of its ends to the structure of said leading edge member and said distribution duct it is held in position over the remainder of its length by slide means (27a).

5. A leading edge member (1a; 1b) of an airfoil (V) according to any of the preceding claims, **characterized in that** it comprises :
- a first compartment (33a ; 33b) inside the leading edge (2a ; 2b) of said leading edge member and containing said distribution duct (15a ; 15b) for de-icing said leading edge,
- a second compartment (35a ; 35b) located under the top surface (7a ; 7b) of said leading edge member, for de-icing said top surface, and
- a third compartment (36a ; 36b) for collecting said hot air,
said first and second compartments, on the one hand, and said second and third compartments, on the other hand, communicating with each other.

6. A leading edge member (1a) of an airfoil (V) according to claim 5, **characterized in that** said leading edge member is mobile, **in that** said hot air supply means include a telescopic tube part (20a), and **in that** said third compartment (36a) is located substantially between said first compartment (33a) and said second compartment (35a).

7. A leading edge member (1a) of an airfoil (V) according to claim 6, **characterized in that** said leading edge member further includes a fourth compartment (37a) located substantially between said first compartment (33a) and the fixed part (3a) of said airfoil and communicating with the outside, and wherein said first compartment (33a), second compartment (35a), third compartment (36a) and fourth compartment (37a) are formed by:
- a spar (38a) whose section is substantially E-shaped fixed to the inside of said leading edge member, having first hot air passages (43a) between the first compartment (33a) and the second compartment (35a) and second hot air passages (47a) between said third compartment (36a) and said fourth compartment (37a),
- an outside section (49) fixed to the top part (39a) of said E and to the top surface (7a) of said leading edge member, having third hot air passages (55a) between said second compartment (35a) and said third compartment (36a), and
- an inside section (51a) fixed to the median part (46a) of the E and to said outside section (49a) and to the top surface (7a) of the leading edge member.

8. A leading edge member (1a) of an airfoil (V) according to claim 7, **characterized in that** said first passages (43a) are established by first embossing (41a) on the top part of said E, **in that** said second passages (47a) are established by second embossing on the median part of said E, and **in that** said third passages (55a) are established by grooves or orifices (54a) on said outside section (49a).

9. A leading edge member (1a) of an airfoil (V) according to claim 5, **characterized in that** said leading edge member is fixed and **in that** said third compartment (36b) is located substantially above the bottom surface (9a) of said airfoil and **in that** said third compartment communicates with the outside.

10. A leading edge member (1a) of an airfoil (V) according to claim 9, **characterized in that** said first compartment (33b), second compartment (35b) and third compartment (36b) are formed by :
- a spar (38b) whose section is substantially C-shaped fixed to the inside of said leading edge member, having first hot air passages (43b) between said first compartment (33b) and said second compartment (35b) and second hot air passages (47b) between said second compartment (35b) and said third compartment (36b), and
- sections (57b) fixed to said C-shaped spar (38b), to the top surface (7a) and to the bottom surface (9b) of said leading edge member.

11. A leading edge member (1a) of an airfoil (V) according to claim 10, **characterized in that** said first (43b) and second (47b) passages are respectively established by first (41 b) and second (47b) embossing on said spar.

12. An airfoil (V) of an aircraft (A), **characterized in that** it comprises a leading edge member (1a ; 1b) according to any of the preceding claims.

13. An aircraft (A), comprising an airfoil (V) according to claim 12.
